# EUROPEAN PATENT SPECIFICATION

(11) **EP 3 541 145 B1**
(45) Date of publication and mention of the grant of the patent: **30.09.2020**
(21) Application number: 18161960.2
(22) Date of filing: 15.03.2018
(51) Int. Cl.: H05B 6/12, F24C 15/10

(54) **INDUCTION COOKER, AND METHOD FOR OPERATING AN INDUCTION COOKER**
INDUKTIONSKOCHER UND VERFAHREN ZUR BEDIENUNG EINES INDUKTIONSKOCHERS
APPAREIL DE CUISSON À INDUCTION ET SON PROCÉDÉ DE FONCTIONNEMENT

(43) Date of publication of application: 18.09.2019
(73) Proprietor: Vestel Elektronik Sanayi ve Ticaret A.S., 45030 Manisa (TR)
(72) Inventor: AK, Yusuf, 45030 Manisa (TR); YALIN, Nevzat, 45030 Manisa (TR)
(74) Representative: Ascherl, Andreas

(56) References cited:
- EP-A1- 3 048 861
- CN-U- 202 475 823
- CN-U- 206 609 008
- FR-A1- 2 261 607
- JP-A- H0 233 884

## Description

### TECHNICAL FIELD

The invention relates to an induction cooker. Further, the invention relates to a method for operating an induction cooker.

### BACKGROUND

Although applicable to any cooking device, the present invention will mainly be described in conjunction with induction cookers.

Induction cookers are cooking devices that transfer energy to cooking vessels via a magnetic field that is generated by switching current through a coil at a high frequency. The switching is usually performed with semiconductor switches that are controlled by PWM signals that are generated by a controller.

The switched currents pass through the induction coil and change with time according to the switching frequency. As a consequence a magnetic field is generated by the coil. This magnetic field induces currents in a ferromagnetic cooking vessel that is placed on the induction cooker and therefore the cooking vessel heats up.

Induction cookers are more power efficient than other types of cookers. However, the performance of the semiconductor switches varies according to the structure and material of the cooking vessel that is placed on the cooking hob over the coil during the switching operation. One relevant parameter that affects the performance and efficiency of the induction cooker is the temperature of the semiconductor switches at the time of switching.

Usually, induction cookers are designed for cooking vessels of a typical or average ferromagnetic permeability. Therefore, with cooking vessels that have a ferromagnetic permeability that is higher than that of an average cooking vessel, more power will be transferred to the cooking vessel and the semiconductor switches will warm up above the normal operating temperature. In contrast, if the ferromagnetic permeability of the cooking vessel is lower than that of an average cooking vessel, less power will be transferred to the cooking vessel and the semiconductor switches will heat up less than under normal operating conditions.

Accordingly, there is a need for improving the heat management of the switching elements in induction cookers. The document EP3048861 A1 discloses an induction cooker according to the preamble of claim 1.

### SUMMARY OF THE INVENTION

The above stated problem is solved by the features of the independent claims. It is understood, that independent claims of a claim category may be formed in analogy to the dependent claims of another claim category.

Accordingly, it is provided:
Induction cooker comprising a cooking surface, a coil that is arranged under the cooking surface, a power electronics circuit that is electrically coupled to the coil for driving the coil with a high frequency electric current, a movement arrangement that is coupled to the coil and that is configured to controllably move the coil towards the cooking surface and away from the cooking surface, and a fluid conduction arrangement that is filled with a fluid and that is thermally coupled to the power electronics circuit and that is mechanically coupled to the movement arrangement such that a volume of the fluid controls the movement of the movement arrangement.

Further, it is provided:
Method for operating an induction cooker according to any one of the preceding claims, the method comprising operating a power electronics circuit of the induction cooker for driving a coil of the induction cooker that is placed under a cooking surface of the induction cooker with a high frequency electric current, transferring heat from the power electronics circuit to a fluid in a fluid conduction arrangement of the induction cooker, and controlling a movement arrangement for controllably moving the coil towards the cooking surface and away from the cooking surface based on a volume of the fluid.

The present invention is based on the finding that the distance between the coil and the cooking surface, may be adjusted in order to adapt the current that runs through the coil of the induction cooker and therefore in order to adapt the load on the power electronics circuit.

For example, when a cooking vessel with a low or a high ferromagnetic permeability compared to an average cooking vessel is placed on the induction cooker, the distance between the cooking vessel's base and the coil may be adaptively changed in order to adapt the load on the power electronics circuit. The distance between the cooking vessel's base and the coil should be closer than for an average cooking vessel when the ferromagnetic permeability of the cooking vessel is lower than that of an average cooking vessel. Otherwise, the desired power values cannot be transferred to the pot by the coil. In contrast, if the ferromagnetic permeability of the cooking vessel is higher than that of an average cooking vessel, the distance between the coil and the base of the cooking vessel should be increased.

To this end, the present invention provides the coil that is movably arranged under the cooking surface and coupled to the movement arrangement. It is understood, that the movement arrangement may at the same time serve to fix or hold the coil under the cooking surface, e.g. on guides or rails. The term "under the cooking surface" in this regard refers to the coil being arranged on the side of the cooking surface that is opposite to the side on which the cooking vessel is placed.

The movement arrangement may comprise any type of element that is necessary to guide the coil and to perform the movement depending on the volume of the fluid. Further, the cooking surface will usually be placed in a horizontal plane. The movement towards and away from the cooking surface may therefore be a vertical movement.

In the induction cooker, heat that is generated at the power electronics circuit will be transferred to the fluid. Consequently, when the temperature of the fluid increases, the volume of the fluid increases and vice versa. The change of the volume of the fluid is then transferred to the movement arrangement and will result in a movement of the coil away from or towards the cooking surface.

With the help of the present invention, the position of the coil will therefore change by upwards and downwards movement that is caused by the volume change of the fluid. Therefore, no temperature sensors or electromechanical movement elements are necessary and a very simple construction is provided.

It is understood, that the induction cooker may also comprise multiple hobs and therefore multiple coils. It is further understood, that the arrangement of the present invention may be provided for every single one of the hobs and coils.

Further embodiments of the present invention are subject of the further subclaims and of the following description, referring to the drawings.

In an embodiment, the fluid conduction arrangement may comprise a heat transfer section that is thermally coupled to the power electronics circuit.

The heat transfer section is the section of the fluid conduction arrangement that is responsible for transferring heat from the power electronics circuit, especially power switches on the power electronics circuit, to the fluid in the fluid conduction arrangement. Therefore, the heat transfer section may e.g. comprise a material with a high thermal conductivity.

In another embodiment, the fluid conduction arrangement may comprise a fluid conduction section that is on one end coupled to the heat transfer section and on the other end coupled to the movement arrangement.

The fluid conduction section is the section that passes on the fluid to the movement arrangement when the volume of the fluid changes according to the heat that is transferred from the power electronics circuit to the fluid. Similar to a heat pipe, where the fluid is converted into vapor at the heat source and then transported to another section of the heat pipe, the fluid conduction arrangement heats up the fluid at the heat transfer section and transports the fluid to another section, i.e. the movement arrangement, where the fluid becomes effective in moving the coil into the desired position.

"Moving" or "passing on" the fluid in this respect not necessarily refers to a pumping-like movement or flow of the fluid. Instead "moving" or "passing on" the fluid may also refer to a simple forwarding of the expansion of the fluid at the power electronics circuit to the movement arrangement.

In a further embodiment, the fluid conduction section may comprise a clear cross section that narrows from the heat transfer section to the movement arrangement.

By narrowing the clear cross section of the fluid conduction section from the heat transfer section to the movement arrangement, the amount of movement of the movement arrangement may be maximized, while the surface that is available for heat transfer to the fluid is maximized at the heat transfer section.

In an embodiment, a thermal conductivity of the heat transfer section may be higher than a thermal conductivity of the fluid conduction section.

By providing the heat transfer section with a higher thermal conductivity than the fluid conduction section, heat is mainly transferred to the fluid via the heat transfer section and not the fluid conduction section. Therefore, the dependence of the movement of the coil from the ambient temperature may be reduced and the temperature of the power electronics circuit will be the main parameter for the position of the coil.

It is understood, that the thermal conductivity of the fluid conduction section may e.g. be reduced by isolating the fluid conduction section. This means, that the fluid conduction arrangement may e.g. be formed of a single component e.g. of copper and that the fluid conduction section may then be isolated separately.

In another embodiment, the fluid conduction arrangement may comprise a number of expandable elements, i.e. one for every spring (see below), wherein the expandable elements may be coupled to the movement arrangement such that the coil moves away from the cooking surface when the volume of the fluid increases.

The expandable elements may e.g. comprise flexible membranes or a kind of hydraulic cylinders with a moving piston that expand when the volume of the fluid increases due to an increase of the temperature of the fluid. The expandable elements may e.g. be provided on that end of the above mentioned fluid conduction section that is coupled to the movement arrangement. It is understood, that the fluid conduction section may split at some point into a dedicated fluid channel or pipe for every one of the expandable elements.

The expandable elements may e.g. be directly coupled to the coil or a frame that supports the coil. Further, the expandable elements may e.g. be arranged between the cooking surface and the coil. Therefore, when the expandable elements expand, the coil will move away from the cooking surface, and when the expandable elements contract, the coil will move toward the cooking surface.

In a further embodiment, the movement arrangement may comprise a number, i.e. one or more, of springs, and the expandable elements may be coupled to the springs such that they expand the springs when the volume of the fluid increases.

It is understood, that a dedicated expandable element may be provided for every spring. However, as alternative every expandable element may actuate more than one spring or more than one expandable element may be provided per spring.

If the expandable elements expand the springs when the volume of the fluid increases, the expandable elements will accordingly reduce the pressure on the springs and allow the springs to contract when the volume of the fluid decreases.

In an exemplary embodiment, three expandable elements may be provided that are coupled to the coil, a respective frame or the springs such that the coil is held in a steady position.

The term "spring" in this context refers to any type of flexible element that comprises a resting position or normal position and that when moved out of this resting position provides a return force that acts to return the flexible element into its resting position. Such a flexible element may also comprise a plurality of movably interrelated elements.

In another embodiment, the fluid may comprise a positive coefficient of expansion, e.g. a positive volumetric coefficient of expansion.

The selection of the fluid depends on the specific dimensions of the induction cooker, especially the operating temperature range of the power electronics circuit and the required range of movement of the movement arrangement.

The fluid may be selected such that with the maximum temperature of the power electronics circuit, the expansion of the fluid is large enough to move the movement arrangement to the end position with the maximum distance between the coil and the cooking surface. Consequently, with the minimum temperature of the power electronics circuit, the movement arrangement may move to the other end position with the minimum distance between the coil and the cooking surface.

The following list is a non-exhaustive list of possible fluids and their respective expansion coefficients:

| **Liquid** | **Volumetric Coefficient of Expansion** | |
|---|---|---|
| | ***(1*/*K, 1*/*°C)*** | ***(1*/*°F)*** |
| Acetic acid | 0.00110 | 0.00061 |
| Acetone | 0.00143 | 0.00079 |
| Alcohol, ethyl (ethanol) | 0.00109 | 0.00061 |
| Alcohol, methyl (methanol,wood alcohol, wood naphtha, wood spirits, CH₃OH) | 0.00149 | 0.00083 |
| Ammonia | 0.00245 | 0.00136 |
| Aniline | 0.00085 | 0.00047 |
| Benzene | 0.00125 | 0.00069 |
| Bromine | 0.00110 | 0.00061 |
| Calcium Chloride, 5.8% solution | 0.00025 | |
| Calcium Chloride, 40.9% solution | 0.00046 | |
| Carbon disulfide | 0.00119 | 0.00066 |
| Carbon tetrachloride | 0.00122 | 0.00068 |
| Chloroform | 0.00127 | 0.00071 |
| Ether | 0.00160 | 0.00089 |
| Ethyl acetate | 0.00138 | 0.00077 |
| Ethylene glycol | 0.00057 | 0.00032 |
| Dichlorodifluoromethane refrigerant R-12 | 0.0026 | 0.00144 |
| n-Heptane | 0.00124 | 0.00069 |
| Hydrochloric acid, 33.2% solution | 0.00046 | |
| Isobutyl alcohol | 0.00094 | 0.00052 |
| Gasoline | 0.00095 | 0.00053 |
| Glycerine (glycerol) | 0.00050 | 0.00028 |
| Kerosene, jet fuel | 0.00099 | 0.00055 |
| Mercury | 0.00018 | 0.00010 |
| Methyl iodide | 0.0012 | 0.00067 |
| n-Octane | 0.00114 | 0.00063 |
| Oil (unused engine oil) | 0.00070 | 0.00039 |
| Olive oil | 0.00070 | |
| Paraffin oil | 0.000764 | 0.00042 |
| Petroleum | 0.0010 | 0.00056 |
| n-Pentane | 0.00158 | 0.00088 |
| Phenol | 0.0009 | 0.00050 |
| Potassium chloride, 24.3% solutiuon | 0.00035 | |
| Sodium chloride, 20.6% solution | 0.00041 | |
| Sodium sulfate, 24% solution | 0.00041 | |
| Sulfuric acid, concentrated | 0.00055 | 0.00031 |
| Toluene | 0.00108 | 0.00060 |
| Trichloroethylene | 0.001170 | 0.00065 |
| Turpentine | 0.001000 | 0.00056 |
| Water | 0.000214 | 0.00012 |

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
- Fig. 1: shows a block diagram of an embodiment of an induction cooker according to the present invention;
- Fig. 2: shows a block diagram of another embodiment of an induction cooker according to the present invention; and
- Fig. 3: shows a flow diagram of an embodiment of a method according to the present invention.

In the figures like reference signs denote like elements unless stated otherwise.

### DETAILED DESCRIPTION OF THE DRAWINGS

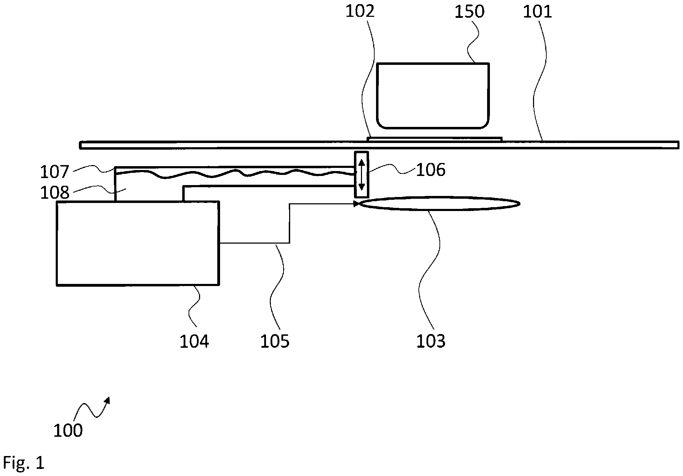

Fig. 1 shows a block diagram of an embodiment of an induction cooker 100. The induction cooker 100 comprises a cooking surface 101 with an exemplary cooking hob 102. Under the cooking hob 102 the induction cooker 100 comprises a coil 103 and a cooking vessel 150 is shown on the cooking hob 102. A power electronics circuit 104 is coupled to the coil 103 via a power line 105. Further, the power electronics circuit 104 is coupled to a fluid conduction arrangement 107 that is filled with a fluid 108. The fluid conduction arrangement 107 is further coupled with a movement arrangement 106 for moving the coil up and down.

During operation of the induction cooker 100, the power electronics circuit 104 will drive the coil 103 with a high frequency current. In response to this driving current, the coil 103 will generate a magnetic field that will induce currents in the cooking vessel 150 and therefore heat up the cooking vessel 150. While driving the coil 103 with the high frequency current, the power electronics circuit 104, especially the switching elements of the power electronics circuit 104, will heat up. The degree of the temperature increase in the power electronics circuit 104 not only depends on the frequency of the high frequency current and the dimensions of the coil 103. Instead, the degree of the temperature increase will also depend on the ferromagnetic permeability of the cooking vessel 150. As explained above, with a cooking vessel 150 that has a very high ferromagnetic permeability, the power electronics circuit 104 will heat up more than with a cooking vessel 150 that has a low ferromagnetic permeability.

To adjust the energy transfer between the coil 103 and the cooking vessel 150, and therefore the temperature increase in the power electronics circuit 104, the induction cooker 100 comprises the movement arrangement 106 that is driven by the volume change of the fluid 108.

To this end, the fluid conduction arrangement 107 that is filled with the fluid 108 is thermally coupled to the power electronics circuit 104. In addition, the fluid conduction arrangement 107 is mechanically coupled to the movement arrangement 106 such that a volume of the fluid 108 controls the movement of the movement arrangement 106. This means, that with increasing volume of the fluid 108, the distance between the coil 103 and the cooking surface 101 will increase and vice versa.

To this end, the fluid 108 may comprise a positive coefficient of expansion. It is understood, that an inverse mechanical arrangement may also be provided that works with a fluid 108 that has a negative coefficient of expansion.

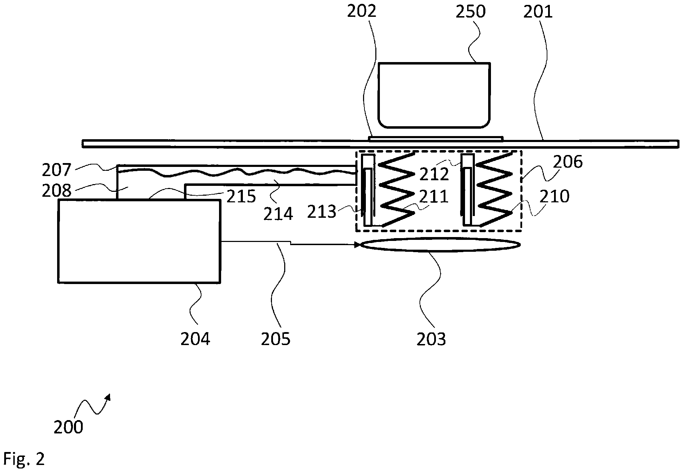

Fig. 2 shows a block diagram of another embodiment of an induction cooker 200. The induction cooker 200 is based on the induction cooker 100. Therefore, the induction cooker 200 also comprises a cooking surface 201 with an exemplary cooking hob 202. Under the cooking hob 202 the induction cooker 200 comprises a coil 203 and a cooking vessel 250 is shown on the cooking hob 202. A power electronics circuit 204 is coupled to the coil 203 via a power line 205. Further, the power electronics circuit 204 is coupled to a fluid conduction arrangement 207 that is filled with a fluid 208. The fluid conduction arrangement 207 is further coupled with a movement arrangement 206 for moving the coil up and down.

The fluid conduction arrangement 207 comprises a heat transfer section 215 that is thermally coupled to the power electronics circuit 204 to maximize the heat transfer between the power electronics circuit 204 and the fluid conduction arrangement 207.

Further, the fluid conduction arrangement 207 comprises a fluid conduction section 214 that is on one end coupled to the heat transfer section 215 and on the other end coupled to the movement arrangement 206. The thermal conductivity of the heat transfer section 215 may be higher than a thermal conductivity of the fluid conduction section 214. To this end, the fluid conduction section 214 may e.g. be isolated or be made from another material than the heat transfer section 215.

In addition or as alternative, the fluid conduction section 214 may comprise a clear cross section that narrows from the heat transfer section to the movement arrangement 206.

The fluid conduction arrangement 207 comprises a number of expandable elements 212, 213, here cylinders. It is understood, that e.g. flexible bladders may also be used. The expandable elements 212, 213 are coupled to the movement arrangement 206 such that the coil 203 moves away from the cooking surface 201 when the volume of the fluid 208 increases. To this end, the movement arrangement 206 comprises two springs 210, 211. It is understood, that the two springs 210, 211 are just exemplarily shown and that any other number of springs, e.g. three or more, may also be provided.

The expandable elements 212, 213 are coupled to the springs 210, 211 such that they expand the springs 210, 211 when the volume of the fluid (108, 208) increases.

In Fig. 2 it becomes clear that an expansion of the fluid 208 will lead to an expansion of the cylinders 212, 213 and will therefore move the coil 103 away from the cooking surface 201, and vice versa.

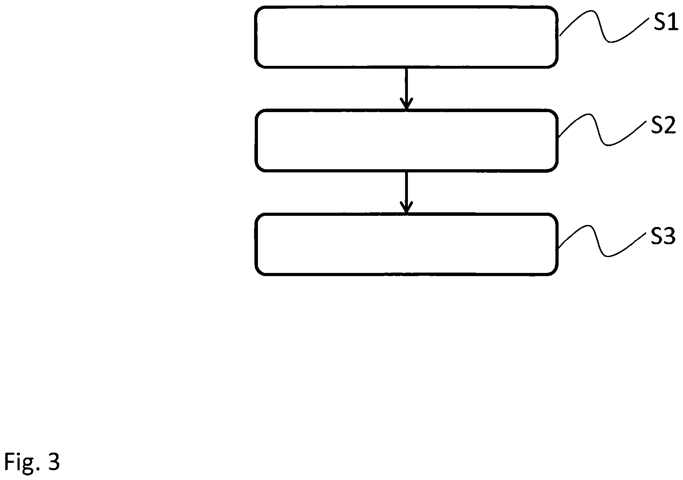

For sake of clarity in the following description of the method based Fig. 3 the reference signs used above in the description of apparatus based Figs. 1 - 2 will be maintained.

Fig. 3 shows a flow diagram of an embodiment of a method for operating an induction cooker 100, 200.

The method comprises operating S1 a power electronics circuit 104, 204 of the induction cooker 100, 200 for driving a coil 103, 203 of the induction cooker 100, 200 that is placed under a cooking surface 101, 201 of the induction cooker 100, 200 with a high frequency electric current, transferring S2 heat from the power electronics circuit 104, 204 to a fluid 108, 208 in a fluid conduction arrangement 107, 207 of the induction cooker 100, 200, and controlling S3 a movement arrangement 106, 206 for controllably moving the coil 103, 203 towards the cooking surface 101, 201 and away from the cooking surface 101, 201 based on a volume of the fluid 108, 208.

It is understood, that the fluid 108, 208 may comprise a positive coefficient of expansion.

According to the method of the present invention heat may e.g. be transferred to the fluid 108, 208 at a heat transfer section 215 of the fluid conduction arrangement 107, 207. Such a heat transfer section 215 may be thermally coupled to the power electronics circuit 104, 204 in order to maximize the heat transfer from e.g. a power electronics circuit of the induction cooker 100, 200 to the fluid 108, 208.

A change of the volume of the fluid 108, 208 is transferred via a fluid conduction section 214 of the fluid conduction arrangement 107, 207 to the movement arrangement 106, 206. To this end fluid conduction section 214 is on one end coupled to the heat transfer section 215 and on the other end coupled to the movement arrangement 106, 206.

In addition, a change of the volume of the fluid 108, 208 may be transferred via a clear cross section of the fluid conduction section 214 that narrows from the heat transfer section 215 to the movement arrangement 106, 206. Further, it is understood, that the fluid conduction section 214 may also split into more than one conduction pipes or elements.

Further, a thermal conductivity of the heat transfer section 215 may be higher than a thermal conductivity of the fluid conduction section 214.

The movement arrangement 106, 206 may be controlled by a number of expandable elements 212, 213 of the fluid conduction arrangement 107, 207. Such expandable elements 212, 213 may be coupled to the movement arrangement 106, 206 such that the coil 103, 203 moves away from the cooking surface 101, 201 when the volume of the fluid 108, 208 increases.

The expandable elements 212, 213 may e.g. expand a number of springs 210, 211 of the movement arrangement 106, 206 when the volume of the fluid 108, 208 increases.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

The present invention provides an induction cooker 100, 200 comprising a cooking surface 101, 201, a coil 103, 203 that is arranged under the cooking surface 101, 201, a power electronics circuit 104, 204 that is electrically coupled to the coil 103, 203 for driving the coil 103, 203 with a high frequency electric current, a movement arrangement 106, 206 that is coupled to the coil 103, 203 and that is configured to controllably move the coil 103, 203 towards the cooking surface 101, 201 and away from the cooking surface 101, 201, and a fluid conduction arrangement 107, 207 that is filled with a fluid 108, 208 and that is thermally coupled to the power electronics circuit 104, 204 and that is mechanically coupled to the movement arrangement 106, 206 such that a volume of the fluid 108, 208 controls the movement of the movement arrangement 106, 206. Further, the present invention provides a method for operating an induction cooker 100, 200.

### List of reference signs

- 100, 200: induction cooker
- 101, 201: cooking surface
- 102, 202: hob
- 103, 203: coil
- 104, 204: power electronics circuit
- 105, 205: power line
- 106, 206: movement arrangement
- 107, 207: fluid conduction arrangement
- 108, 208: fluid

- 210, 211: spring
- 212, 213: cylinder
- 214: fluid conduction section
- 215: heat transfer section

- 150, 250: cooking vessel

- S1, S2, S3: method steps

## Claims

1. Induction cooker (100, 200) comprising:
a cooking surface (101, 201),
a coil (103, 203) that is arranged under the cooking surface (101, 201),
a power electronics circuit (104, 204) that is electrically coupled to the coil (103, 203) for driving the coil (103, 203) with a high frequency electric current,
a movement arrangement (106, 206) that is coupled to the coil (103, 203) and that is configured to controllably move the coil (103, 203) towards the cooking surface (101, 201) and away from the cooking surface (101, 201), **characterised by**
a fluid conduction arrangement (107, 207) that is filled with a fluid (108, 208) and that is thermally coupled to the power electronics circuit (104, 204) and that is mechanically coupled to the movement arrangement (106, 206) such that a volume of the fluid (108, 208) controls the movement of the movement arrangement (106, 206).

2. Induction cooker (100, 200) according to claim 1, wherein the fluid conduction arrangement (107, 207) comprises a heat transfer section (215) that is thermally coupled to the power electronics circuit (104, 204).

3. Induction cooker (100, 200) according to claim 2, wherein the fluid conduction arrangement (107, 207) comprises a fluid conduction section (214) that is on one end coupled to the heat transfer section (215) and on the other end coupled to the movement arrangement (106, 206).

4. Induction cooker (100, 200) according to claim 3, wherein the fluid conduction section (214) comprises a clear cross section that narrows from the heat transfer section (215) to the movement arrangement (106, 206).

5. Induction cooker (100, 200) according to any one of claims 3 and 4, wherein a thermal conductivity of the heat transfer section (215) is higher than a thermal conductivity of the fluid conduction section (214).

6. Induction cooker (100, 200) according to any one of the preceding claims, wherein the fluid conduction arrangement (107, 207) comprises a number of expandable elements (212, 213), wherein the expandable elements (212, 213) are coupled to the movement arrangement (106, 206) such that the coil (103, 203) moves away from the cooking surface (101, 201) when the volume of the fluid (108, 208) increases.

7. Induction cooker (100, 200) according to claim 6, wherein the movement arrangement (106, 206) comprises a number of springs (210, 211), and wherein the expandable elements (212, 213) are coupled to the springs (210, 211) such that they expand the springs (210, 211) when the volume of the fluid (108, 208) increases.

8. Induction cooker (100, 200) according to any one of the preceding claims, wherein the fluid (108, 208) comprises a positive coefficient of expansion.

9. Method for operating an induction cooker (100, 200) according to any one of the preceding claims, the method comprising:
operating (S1) a power electronics circuit (104, 204) of the induction cooker (100, 200) for driving a coil (103, 203) of the induction cooker (100, 200) that is placed under a cooking surface (101, 201) of the induction cooker (100, 200) with a high frequency electric current, **characterised by**
transferring (S2) heat from the power electronics circuit (104, 204) to a fluid (108, 208) in a fluid conduction arrangement (107, 207) of the induction cooker (100, 200), and
controlling (S3) a movement arrangement (106, 206) for controllably moving the coil (103, 203) towards the cooking surface (101, 201) and away from the cooking surface (101, 201) based on a volume of the fluid (108, 208).

10. Method according to claim 9, wherein the heat is transferred to the fluid (108, 208) at a heat transfer section (215) of the fluid conduction arrangement (107, 207), and wherein the heat transfer section (215) is thermally coupled to the power electronics circuit (104, 204).

11. Method according to claim 10, wherein a change of the volume of the fluid (108, 208) is transferred via a fluid conduction section (214) of the fluid conduction arrangement (107, 207), wherein the fluid conduction section (214) is on one end coupled to the heat transfer section (215) and on the other end coupled to the movement arrangement (106, 206).

12. Method according to claim 11, wherein a change of the volume of the fluid (108, 208) is transferred via a clear cross section of the fluid conduction section (214) that narrows from the heat transfer section (215) to the movement arrangement (106, 206); and/or
wherein a thermal conductivity of the heat transfer section (215) is higher than a thermal conductivity of the fluid conduction section (214).

13. Method according to any one of the preceding claims 9 to 13, wherein the movement arrangement (106, 206) is controlled by a number of expandable elements (212, 213) of the fluid conduction arrangement (107, 207), wherein the expandable elements (212, 213) are coupled to the movement arrangement (106, 206) such that the coil (103, 203) moves away from the cooking surface (101, 201) when the volume of the fluid (108, 208) increases.

14. Method according to claim 13, wherein the expandable elements (212, 213) expand a number of springs (210, 211) of the movement arrangement (106, 206) when the volume of the fluid (108, 208) increases.

15. Method according to any one of the preceding claims 9 to 14, wherein the fluid (108, 208) comprises a positive coefficient of expansion.

## Patentansprüche

1. Induktionsherd (100, 200) bestehend aus:
einer Kochfläche (101, 201),
eine Spule (103, 203), die unter der Kochfläche (101, 201) angeordnet ist,
eine Leistungselektronikschaltung (104, 204), die elektrisch mit der Spule (103, 203) gekoppelt ist, um die Spule (103, 203) mit einem hochfrequenten elektrischen Strom anzutreiben,
eine Bewegungsanordnung (106, 206), die mit der Spule (103, 203) gekoppelt ist und die so konfiguriert ist, dass sie die Spule (103, 203) steuerbar zur Kochfläche (101, 201) hin und von der Kochfläche (101, 201) wegbewegt, **gekennzeichnet durch**
eine Fluidleitungsanordnung (107, 207), die mit einem Fluid (108, 208) gefüllt ist und die thermisch mit der Leistungselektronikschaltung (104, 204) gekoppelt ist und die mechanisch mit der Bewegungsanordnung (106, 206) gekoppelt ist, so dass ein Volumen des Fluids (108, 208) die Bewegung der Bewegungsanordnung (106, 206) steuert.

2. Induktionsherd (100, 200) nach Anspruch 1, wobei die Fluidleitungsanordnung (107, 207) einen Wärmeübertragungsabschnitt (215) aufweist, der thermisch mit der Leistungselektronikschaltung (104, 204) gekoppelt ist.

3. Induktionsherd (100, 200) nach Anspruch 2, wobei die Fluidleitungsanordnung (107, 207) einen Fluidleitungsabschnitt (214) aufweist, der an einem Ende mit dem Wärmeübertragungsabschnitt (215) und an dem anderen Ende mit der Bewegungsanordnung (106, 206) gekoppelt ist.

4. Induktionsherd (100, 200) nach Anspruch 3, wobei der Fluidleitungsabschnitt (214) einen freien Querschnitt aufweist, der sich vom Wärmeübertragungsabschnitt (215) zur Bewegungsanordnung (106, 206) verengt.

5. Induktionsherd (100, 200) nach einem der Ansprüche 3 und 4, wobei eine Wärmeleitfähigkeit des Wärmeübertragungsabschnitts (215) höher ist als eine Wärmeleitfähigkeit des Fluidleitungsabschnitt (214).

6. Induktionsherd (100, 200) nach einem der vorhergehenden Ansprüche, wobei die Fluidleitungsanordnung (107, 207) eine Anzahl von ausdehnbaren Elementen (212, 213) aufweist, wobei die ausdehnbaren Elemente (212, 213) mit der Bewegungsanordnung (106, 206) derart gekoppelt sind, dass sich die Spule (103, 203) von der Kochfläche (101, 201) wegbewegt, wenn das Volumen des Fluids (108, 208) zunimmt.

7. Induktionskocher (100, 200) nach Anspruch 6, wobei die Bewegungsanordnung (106, 206) eine Anzahl von Federn (210, 211) umfasst, und wobei die ausdehnbaren Elemente (212, 213) mit den Federn (210, 211) derart gekoppelt sind, dass sie die Federn (210, 211) ausdehnen, wenn das Volumen des Fluids (108, 208) zunimmt.

8. Induktionsherd (100, 200) nach einem der vorstehenden Ansprüche, wobei das Fluid (108, 208) einen positiven Ausdehnungskoeffizienten aufweist.

9. Verfahren zum Betreiben eines Induktionsherdes (100, 200) nach einem beliebigen der vorhergehenden Ansprüche, wobei das Verfahren umfasst:
Betreiben (S1) einer Leistungselektronikschaltung (104, 204) des Induktionsherdes (100, 200) zum Ansteuern einer Spule (103, 203) des Induktionsherdes (100, 200), die unter einer Kochfläche (101, 201) des Induktionsherdes (100, 200) angeordnet ist, mit einem hochfrequenten elektrischen Strom, **gekennzeichnet durch**
Übertragen (S2) von Wärme von der Leistungselektronikschaltung (104, 204) auf ein Fluid (108, 208) in einer Fluidleitungsanordnung (107, 207) des Induktionsherdes (100, 200), und
Steuern (S3) einer Bewegungsanordnung (106, 206) zum steuerbaren Bewegen der Spule (103, 203) auf die Kochfläche (101, 201) zu und von der Kochfläche (101, 201) weg, basierend auf einem Volumen des Fluids (108, 208).

10. Verfahren nach Anspruch 9, wobei die Wärme an einem Wärmeübertragungsabschnitt (215) der Fluidleitungsanordnung (107, 207) auf das Fluid (108, 208) übertragen wird, und wobei der Wärmeübertragungsabschnitt (215) thermisch mit der Leistungselektronikschaltung (104, 204) gekoppelt ist.

11. Verfahren nach Anspruch 10, wobei eine Änderung des Volumens des Fluids (108, 208) über einen Fluidleitungsabschnitt (214) der Fluidleitungsanordnung (107, 207) übertragen wird, wobei der Fluidleitungsabschnitt (214) an einem Ende mit dem Wärmeübertragungsabschnitt (215) und an dem anderen Ende mit der Bewegungsanordnung (106, 206) gekoppelt ist.

12. Verfahren nach Anspruch 11, wobei eine Änderung des Volumens des Fluids (108, 208) über einen freien Querschnitt des Fluidleitungsabschnitts (214), der sich von dem Wärmeübertragungsabschnitt (215) zu der Bewegungsanordnung (106, 206) verengt, übertragen wird; und/oder
wobei eine Wärmeleitfähigkeit des Wärmeübertragungsabschnitts (215) höher ist als eine Wärmeleitfähigkeit des Fluidleitungsabschnitts (214).

13. Verfahren nach einem der vorhergehenden Ansprüche 9 bis 13, wobei die Bewegungsanordnung (106, 206) durch eine Anzahl von ausdehnbaren Elementen (212, 213) der Fluidleitungsanordnung (107, 207) gesteuert wird, wobei die ausdehnbaren Elemente (212, 213) mit der Bewegungsanordnung (106, 206) derart gekoppelt sind, dass sich die Spule (103, 203) von der Kochfläche (101, 201) wegbewegt, wenn das Volumen des Fluids (108, 208) zunimmt.

14. Verfahren nach Anspruch 13, wobei die ausdehnbaren Elemente (212, 213) eine Anzahl von Federn (210, 211) der Bewegungseinrichtung (106, 206) ausdehnen, wenn das Volumen des Fluids (108, 208) zunimmt.

15. Verfahren nach einem der vorhergehenden Ansprüche 9 bis 14, wobei das Fluid (108, 208) einen positiven Ausdehnungskoeffizienten aufweist.

## Revendications

1. Cuisinière à induction (100, 200) comprenant :
une surface de cuisson (101, 201),
un serpentin (103, 203) qui est disposé sous la surface de cuisson (101, 201),
un circuit électronique de puissance (104, 204) qui est couplé électriquement à la bobine (103, 203) pour entraîner la bobine (103, 203) avec un courant électrique à haute fréquence,
un dispositif de déplacement (106, 206) qui est couplé à la bobine (103, 203) et qui est configuré pour déplacer de manière contrôlée la bobine (103, 203) vers la surface de cuisson (101, 201) et à l'écart de la surface de cuisson (101, 201), et **caractérisé par**
un dispositif de conduction de fluide (107, 207) qui est rempli d'un fluide (108, 208) et qui est couplé thermiquement au circuit électronique de puissance (104, 204) et qui est couplé mécaniquement au dispositif de mouvement (106, 206) de telle sorte qu'un volume du fluide (108, 208) contrôle le mouvement du dispositif de mouvement (106, 206).

2. Cuisinière à induction (100, 200) selon la revendication 1, dans laquelle l'agencement de conduction de fluide (107, 207) comprend une section de transfert de chaleur (215) qui est couplée thermiquement au circuit électronique de puissance (104, 204).

3. Cuisinière à induction (100, 200) selon la revendication 2, dans laquelle l'agencement de conduction de fluide (107, 207) comprend une section de conduction de fluide (214) qui est couplée à une extrémité à la section de transfert de chaleur (215) et à l'autre extrémité à l'agencement de mouvement (106, 206).

4. Cuisinière à induction (100, 200) selon la revendication 3, dans laquelle la section de conduction de fluide (214) comprend une section transversale claire qui se rétrécit de la section de transfert de chaleur (215) à l'agencement de mouvement (106, 206).

5. Cuisinière à induction (100, 200) selon l'une quelconque des revendications 3 et 4, dans laquelle une conductivité thermique de la section de transfert de chaleur (215) est supérieure à une conductivité thermique de la section de conduction de fluide (214).

6. Cuisinière à induction (100, 200) selon l'une quelconque des revendications précédentes, dans laquelle l'agencement de conduction de fluide (107, 207) comprend un certain nombre d'éléments expansibles (212, 213), dans laquelle les éléments expansibles (212, 213) sont couplés à l'agencement de mouvement (106, 206) de telle sorte que la bobine (103, 203) s'éloigne de la surface de cuisson (101, 201) lorsque le volume du fluide (108, 208) augmente.

7. Cuisinière à induction (100, 200) selon la revendication 6, dans laquelle l'agencement de mouvement (106, 206) comprend un certain nombre de ressorts (210, 211), et dans laquelle les éléments extensibles (212, 213) sont couplés aux ressorts (210, 211) de telle sorte qu'ils dilatent les ressorts (210, 211) lorsque le volume du fluide (108, 208) augmente.

8. Cuiseur à induction (100, 200) selon l'une des revendications précédentes, dans lequel le fluide (108, 208) comprend un coefficient de dilatation positif.

9. Procédé de fonctionnement d'une plaque de cuisson à induction (100, 200) selon l'une quelconque des revendications précédentes, le procédé comprenant :
le fonctionnement (S1) d'un circuit électronique de puissance (104, 204) de la cuisinière à induction (100, 200) pour commander une bobine (103, 203) de la cuisinière à induction (100, 200) qui est placée sous une surface de cuisson (101, 201) de la cuisinière à induction (100, 200) avec un courant électrique à haute fréquence, **caractérisé par**
transférer (S2) la chaleur du circuit électronique de puissance (104, 204) à un fluide (108, 208) dans un dispositif de conduction de fluide (107, 207) de la cuisinière à induction (100, 200), et
contrôler (S3) un dispositif de déplacement (106, 206) pour déplacer de manière contrôlée le serpentin (103, 203) vers la surface de cuisson (101, 201) et à l'écart de la surface de cuisson (101, 201) en fonction d'un volume de fluide (108, 208).

10. Procédé selon la revendication 9, dans lequel la chaleur est transférée au fluide (108, 208) au niveau d'une section de transfert de chaleur (215) du dispositif de conduction de fluide (107, 207), et dans lequel la section de transfert de chaleur (215) est couplée thermiquement au circuit électronique de puissance (104, 204).

11. Procédé selon la revendication 10, dans lequel une modification du volume du fluide (108, 208) est transmise par l'intermédiaire d'une section de conduction de fluide (214) de l'agencement de conduction de fluide (107, 207), dans lequel la section de conduction de fluide (214) est couplée à une extrémité à la section de transfert de chaleur (215) et à l'autre extrémité à l'agencement de mouvement (106, 206).

12. Procédé selon la revendication 11, dans lequel un changement de volume du fluide (108, 208) est transféré via une section transversale claire de la section de conduction de fluide (214) qui se rétrécit de la section de transfert de chaleur (215) à l'agencement de mouvement (106, 206) ; et/ou
dans lequel une conductivité thermique de la section de transfert de chaleur (215) est supérieure à une conductivité thermique de la section de conduction de fluide (214).

13. Procédé selon l'une quelconque des revendications précédentes 9 à 13, dans lequel l'agencement de mouvement (106, 206) est commandé par un certain nombre d'éléments extensibles (212, 213) de l'agencement de conduction de fluide (107, 207), dans lequel les éléments extensibles (212, 213) sont couplés à l'agencement de mouvement (106, 206) de telle sorte que la bobine (103, 203) s'éloigne de la surface de cuisson (101, 201) lorsque le volume du fluide (108, 208) augmente.

14. Procédé selon la revendication 13, dans lequel les éléments extensibles (212, 213) dilatent un certain nombre de ressorts (210, 211) de l'agencement de mouvement (106, 206) lorsque le volume du fluide (108, 208) augmente.

15. Procédé selon l'une quelconque des revendications 9 à 14 précédentes, dans lequel le fluide (108, 208) comprend un coefficient de dilatation positif.
